# FASCICULE DE BREVET EUROPEEN

(11) **EP 1 101 959 B1**
(45) Date de publication et mention de la délivrance du brevet: **12.02.2003**
(21) Numéro de dépôt: 99811067.0
(22) Date de dépôt: 18.11.1999
(51) Int. Cl.: F16B 45/02, B63B 21/54

(54) **Dispositif d'accrochage et de décrochage à mousqueton, notament pour l'amarrage de bateaux**
Karabinerhaken-Vorrichtung, besonders für Boote
Snap-hook device, particularly for mooring boats

(43) Date de publication de la demande: 23.05.2001
(73) Titulaire: C. Sherman Johnson Company, Inc., East Haddam, Connecticut 06423 (US)
(72) Inventeur: Ringrose, Anthony Stephen, 1224 Chêne-Bougeries (CH)
(74) Mandataire: Leckey, David Herbert

(56) Documents cités:
- EP-A- 0 644 340
- DE-C- 698 825
- US-A- 3 918 758
- US-A- 5 538 303

## Description

La présente invention se rapporte à un dispositif d'accrochage et de largage, notamment pour l'amarrage de bateaux, comprenant une boucle, fermée par un clapet maintenu en position de fermeture par deux ressorts.

Le problème de l'accrochage à distance du point d'accrochage se pose dans la varappe, la spéléologie et surtout dans l'amarrage des bateaux, bien que cette liste ne soit nullement exhaustive.

Si on a pensé depuis longtemps au problème de l'accrochage automatique à l'aide d'un mousqueton dont le clapet est maintenu en position de fermeture par un ressort qui l'applique de l'intérieur de la boucle contre l'extrémité du crochet du mousqueton, de sorte qu'en appuyant le crochet du mousqueton contre l'anneau d'une bouée par exemple, le clapet rentre à l'intérieur de la boucle et ensuite se referme grâce au ressort qui ramène le clapet en position de fermeture, le problème de l'ouverture du mousqueton et son décrochage de l'anneau n'est encore que partiellement résolu.

On a déjà proposé dans le US-653021 un crochet à mousqueton dont l'ouverture du clapet peut être commandé à distance. Toutefois, dans ce dispositif la force de traction exercée par le bateau sur le crochet se transmet à celui-ci à travers le mécanisme d'ouverture du clapet. Or, chaque élément, par exemple la liaison entre l'amarre du bateau et le crochet, ainsi que le mécanisme de fermeture du clapet doit être proportionné pour résister a cette force, qui pourrait être de plusieurs centaines de Newtons. De ce fait le dispositif sera forcement massif et lourd, et par conséquent très coûteux à fabriquer. En plus, suivant l'état de la mer, les à-coups causés par les vagues et les rafales de vent vont faire actionner le mécanisme d'ouverture en permanence ce qui provoquera une usure précoce du mécanisme.

On a aussi proposé dans le US-A-4,595,223 un crochet à mousqueton dont l'ouverture du clapet peut être commandé à distance à l'aide d'un dispositif allongé, spécifique à cette utilisation. Toutefois, il ne faut pas oublier que lors du décrochage de la boucle d'amarrage, suivant l'état de la mer et la force et la direction du vent, c'est une force de plusieurs centaines de N qui s'exerce sur le crochet, de sorte que même si celui-ci est ouvert à distance par l'ouverture du clapet, il reste à dégager le crochet de la boucle d'amarrage. Or, avec la traction exercée par le bateau sur le crochet par l'intermédiaire de la corde de liaison, le bateau n'est pas libéré, même avec le clapet ouvert, à cause de la traction exercée sur lui.

Plus récemment on a proposé d'autres types de dispositif où le crochet du mousqueton est façonné en plusieurs parties, avec un système de basculement autour d'un axe d'une des parties du crochet, notamment de la partie qui tient la bouée d'amarrage. Un élément mobile rend les deux parties du crochet solidaires entre elles. Pour larguer l'amarrage on déplace le dit élément mobile en tirant sur son mécanisme de commande à l'aide d'une corde ou d'une gaffe, afin de laisser pivoter librement autour de son axe la partie du crochet qui tient la bouée. La demande de brevet européen EP 0 644 340 A3 est un exemple de ce type de dispositif.
L'inconvénient principal de ce type d'exécution est le fait qu'il n' y a pas une très grande sécurité, étant donné qu'elle est toujours tributaire d'un largage non-desiré de l'amarre dû a un basculement intempestif de la partie du crochet qui attache le bateau à la bouée. Ceci peut être le résultat d'une fausse manoeuvre ou dû à une rupture ou un malfonctionnement d'une des pièces du mécanisme du mousqueton, ce qui entraînerait des conséquences très fâcheuses. En plus, ces mécanismes plus ou moins compliqués sont assez chers à fabriquer. Il faut aussi tenir compte du fait qu'ils sont en principe destinés uniquement à un amarrage temporaire et surveillé d'un bateau lors de son arrivé ou de son départ, ceci à cause dudit manque de sécurité.

Comme on le voit, on n'a pas encore inventé le dispositif idéal pour les manoeuvres d'amarrage et de largage des amarres d'un bateau. Idéalement un tel dispositif devrait être simple, robuste et fiable, permettant aussi un amarrage quasi permanent et non surveillé du navire.

C'est précisément le but de la présente invention d'apporter une solution qui remédie aux inconvénients sus-mentionnés.

A cet effet, la présente invention a pour objet un dispositif d'accrochage et de décrochage à mousqueton, notamment pour l'amarrage de bateaux selon la revendication 1.

Les dessins annexés illustrent, schématiquement et à titre d'exemple, une forme d'exécution.

La figure 1 est une vue générale de cette forme d'exécution.

La figure 2 est une vue en direction de la flèche A de la figure 1.

La figure 3 est une vue en coupe selon B-B de la figure 2.

La figure 4 est une vue en coupe selon C-C de la figure 2, avec le clapet en position ouverte.

La figure 5 est une vue du mousqueton en position de dégagement.

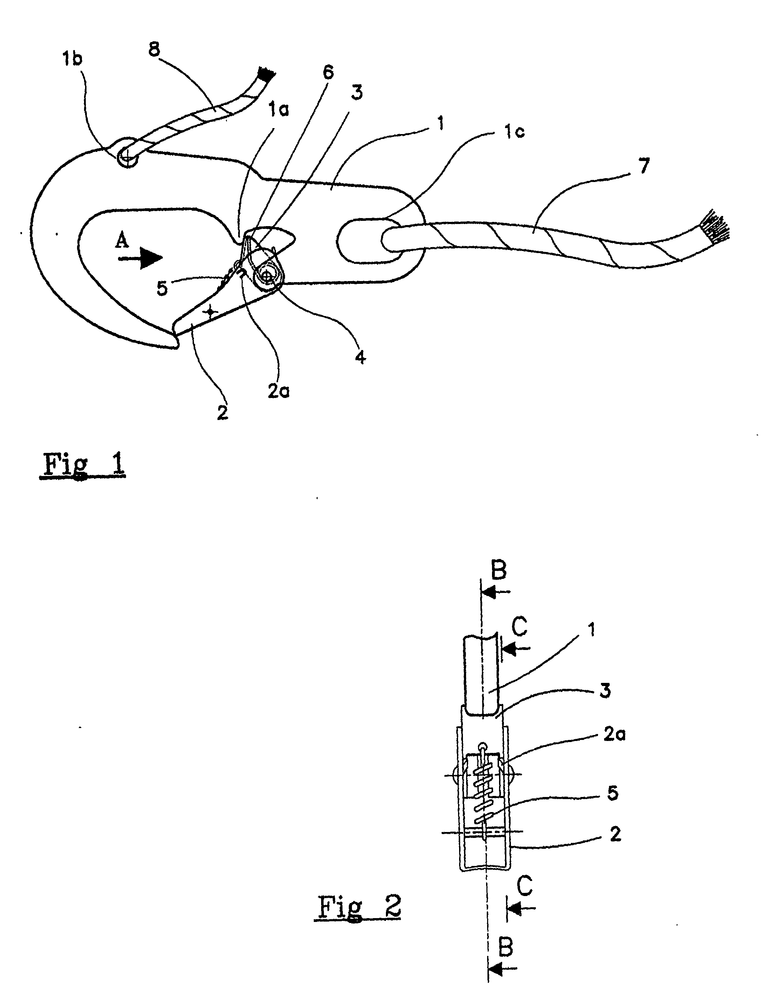

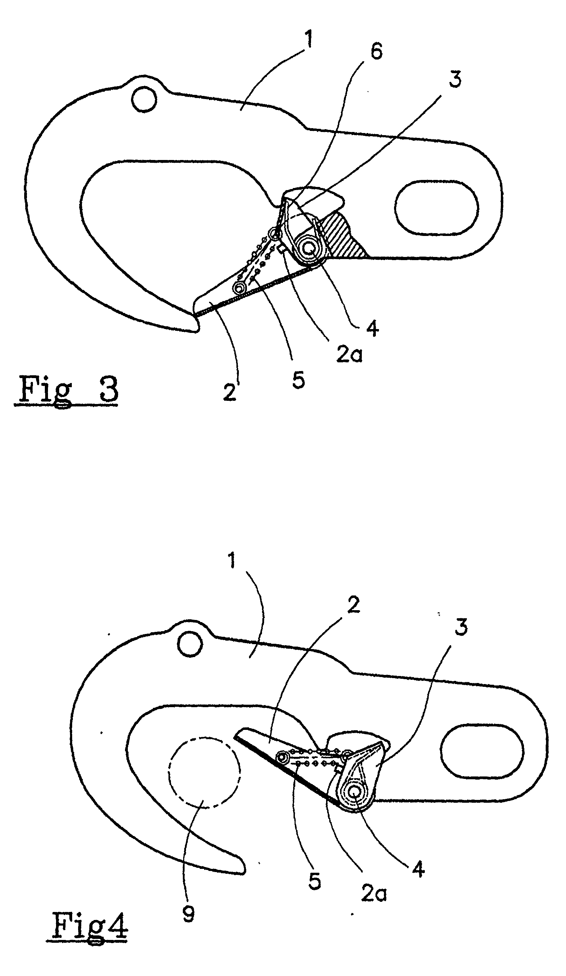

Le dispositif d'accrochage illustré par les figures 1 à 5 comporte un corps (1) en forme d'un crochet avec, à une extrémité un point d'attache (lc) pour l'accrochage d'une corde (7), et un second point d'attache (1b) situé sensiblement en face de la partie ouverte du crochet pour l'attache d'un deuxième corde (8) ou d'un simple anneau (non illustré). La partie médiane du corps présente un trou perpendiculaire au plan du corps, destiné à loger un axe de pivotement (4). Une butée (1a) est disposé sur la face intérieure du corps.

L'axe (4) sert d'articulation à un clapet formé d'un levier(2) et un étrier (3). Ce levier et cet étrier pivotent ensemble sur l'axe (4). Le levier (2) comporte une butée (2a) qui est maintenue appliquée contre une face de l'étrier (3) par un ressort de rappel (5), ces trois éléments formant ainsi un ensemble pivotant. Un deuxième ressort (6), positionné autour de l'axe (4), appuie ledit étrier (3), contre ladite butée (1a) du corps, assurant ainsi la fermeture du crochet par le clapet.

Le fonctionnement du dispositif d'accrochage décrit est le suivant:

Lors de l'amarrage, l'utilisateur projette le mousqueton, fermé par le clapet, de manière à ce que la boucle de la bouée (9) rencontre le clapet qui s'ouvre automatiquement à l'encontre du ressort de rappel (6), vers l'intérieur du mousqueton, ce qui permet à la boucle d'amarrage de rentrer dans le mousqueton, dont le clapet se referme automatiquement sous l'action dudit ressort de rappel.

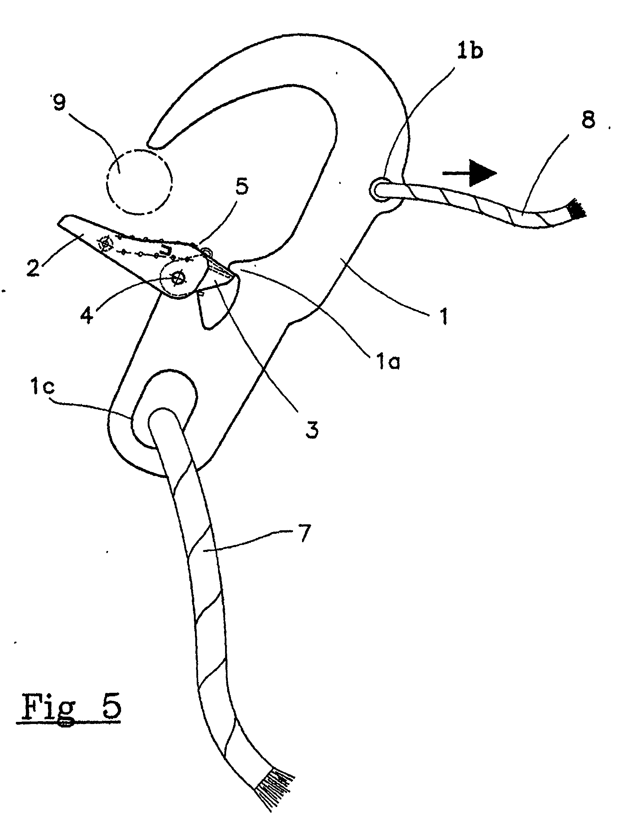

Lorsque l'on désire libérer le dispositif d'accrochage de la boucle à laquelle on l'a accroché, il faut larguer partiellement la corde d'amarrage du bateau (7), et ensuite tirer sur la corde de dégagement (8) (ou sur d'autres moyens, par exemple une boucle, fixée audit point d'attache du corps) de manière à faire basculer le mousqueton dans sa position de dégagement, comme illustré par la figure 5. Dans cette position une traction continue sur le corde (8) (ou sur d'autres moyens attachés au point d'attache) va appuyer la boucle de la bouée (9) contre l'intérieur du clapet, de manière à faire pivoter ledit levier, à l'encontre du ressort de rappel (5), vers l'extérieur du mousqueton, comme illustré par la figure 5. Une fois la boucle de la bouée dégagée, ledit levier reprend sa position initiale de fermeture du mousqueton sous l'effet dudit ressort de rappel.
Ainsi l'amarrage s'effectue à l'aide d'un système semblable à un mousqueton classique tandis que le largage résulte du pivotement du mousqueton lui-même, suivi par l'ouverture automatique du clapet vers l'extérieur du mousqueton sous l'effet de la forte traction exercée sur lui, à un angle quasi perpendiculaire à son mouvement de pivotement, par la boucle d'amarrage. Bien entendu, ce mousqueton peut être fixé à l'extrémité d'une tige ou d'une gaffe, par les moyens appropriés, afin de pouvoir faire toutes ces manipulations à plus grande distance.

Le dispositif selon l'invention est en outre simple, robuste, fiable et comporte peu de pièces. Son crochet fabriqué en une pièce est idéal pour résister aux forces de traction exercées par le bateau. Le fait que le système à mousqueton peut être fixé sur une tige allongée (une gaffe par exemple) facilite l'accrochage et le décrochage à distance.

## Revendications

1. Mousqueton comportant une boucle fermée, comprenant un crochet auquel un clapet (2) est articulé autour d'un axe (4) perpendiculaire au plan de ladite boucle, une butée (1a) pour limiter le pivotement dudit clapet (2) à sa position de fermeture de ladite boucle et des moyens élastiques (6) pour exercer entre ledit clapet et ledit crochet un couple tendant à appliquer ledit clapet (2) contre ladite butée (1a), **caractérisé en ce que** ledit clapet (2) comporte deux parties articulées l'un à l'autre autour d'un axe (4) perpendiculaire au plan de ladite boucle, des moyens de butée (2a) pour limiter leur déplacement l'un par rapport à l'autre, et des seconds moyens élastiques (5) pour appliquer entre les deux parties dudit clapet un couple de sens contraire au couple exercé entre ledit clapet (2) et ledit crochet et tendant constamment à les appliquer contre lesdits moyens de butée (2a).

2. Mousqueton selon la revendication 1, **caractérisé en ce que** l'axe (4) d'articulation du clapet (2) et l'axe de l'articulation (4) des deux parties articulées du clapet, sont confondus.

3. Mousqueton selon l'une des revendications précédentes, **caractérisé en ce que** une desdites parties du clapet présente une forme de levier (2), entre les branches parallèles duquel un étrier (3) formant l'autre desdites parties est monté, lesdites moyens de butée (2a) étant constitués par déformation d'une portion d'au moins une desdites branches parallèles dudit levier, dans la trajectoire dudit étrier (3).

4. Mousqueton selon l'une des revendications précédentes, **caractérisé en ce que** le moment du couple exercé entre les deux parties dudit clapet (2) est sensiblement supérieur à celui du couple exercé entre ledit clapet (2) et ledit crochet.

5. Mousqueton selon l'une des revendications précédentes, **caractérisé en ce que** ledit crochet comporte un premier point d'attache (1c) situé à une extrémité du crochet, sur un axe de gravité passant par cette extrémité et sensiblement par le milieu de la boucle fermée par ledit clapet, et un second point d'attache (1b) situé sensiblement symétriquement à l'opposé de l'extrémité fermée par ledit clapet par rapport audit axe de gravité.

6. Mousqueton selon l'une des revendications précédentes **caractérisé en ce que** ledit mousqueton comporte des moyens de fixation temporaire à l'extrémité d'une gaffe ou d'une tige allongée.

## Patentansprüche

1. Karabinerhaken mit einer geschlossenen Schnalle bestehend aus einem Haken, an dem eine Klappe bzw. Schließe (2) um eine zu der Ebene der Schnalle senkrechte Achse (4) angelenkt ist, aus einem Anschlag (1a) zum Begrenzen der Schwenkbewegung der Schließe (2) in deren Schließstellung der Schnalle und aus elastischen Mitteln (6) zum Erzeugen eines Kräftepaars zwischen der Schließe und dem Haken, das dahin wirkt, die Schließe (2) gegen den Anschlag (1a) zu drücken, **dadurch gekennzeichnet daß** die Schließe (2) zwei Abschnitte aufweist, die um eine zu der Ebene der Schnalle senkrechte Achse (4) aneinander angelenkt sind, Anschlagmittel (2a) zum Begrenzen der gegenseitigen Bewegung der Abschnitte und zweite elastische Mittel (5) zum Erzeugen eines dem zwischen der Schließe (2) und dem Haken wirkenden Kräftepaar entgegengerichteten Kräftepaars zwischen den beiden Abschnitten der Schließe, das ständig darauf hinwirkt, die beiden Abschnitte gegen die Anschlagmittel (2a) zu drücken.

2. Karabinerhaken nach Anspruch (1), **dadurch gekennzeichnet daß** die Anlenkachse (4) der Schließe (2) und die Anlenkachse (4) der beiden angelenkten Abschnitte der Schließe dekkungsgleich sind.

3. Karabinerhaken nach einem der voranstehenden Ansprüche, **dadurch gekennzeichnet, daß** einer der Abschnitte der Schließe die Form eines Hebels (2) aufweist, zwischen dessen parallelen Schenkeln ein Bügel (3) angeordnet ist, der den anderen der Abschnitte bildet, wobei die Anschlagmittel (2a) durch eine Formänderung eines Teilstücks mindestens einer der parallelen Schenkel des Hebels im Schwenkweg des Bügels (3) gebildet sind.

4. Karabinerhaken nach einem der voranstehenden Ansprüche, **dadurch gekennzeichnet, daß** das Moment des zwischen den beiden Abschnitten der Schließe (2) ausgeübten Kräftepaars wesentlich größer ist als dasjenige des zwischen der Schließe (2) und dem Haken ausgeübten Kräftepaars.

5. Karabinerhaken nach einem der voranstehenden Ansprüche, **dadurch gekennzeichnet daß** der Haken einen ersten Befestigungspunkt (1c) aufweist, der an einem Ende des Hakens auf einer Schwerlinie angeordnet ist, die sich durch dieses Ende und im wesentlichen durch die Mitte der geschlossenen Schnalle durch die Schließe erstreckt, und einen zweiten Befestigungspunkt (1b) aufweist, der im wesentlichen symmetrisch gegenüber dem durch die Schließe geschlossenen Ende bezüglich der Schwerlinie angeordnet ist.

6. Karabinerhaken nach einem der voranstehenden Ansprüche, **dadurch gekennzeichnet, daß** der Karabinerhaken Mittel zur zeitweiligen Befestigung an dem Ende eines Boothakens oder einer langen Stange aufweist.

## Claims

1. Snap shackle having a closed shackle loop, comprising a hook on which a latch (2) is hinged about an axis (4) perpendicular to the plane of said shackle loop, an abutment (1a) for limiting the pivoting of said latch (2) into its position of closing said shackle loop and resilient means (6) for exerting, between said latch and said hook, a couple tending to press said latch (2) against said abutment (1a), **characterised in that** said latch (2) comprises two parts hinged one relative to the other about an axis (4) perpendicular to the plane of said shackle loop, abutment means (2a) for limiting their movement relative to one another, and second resilient means (5) for applying a couple, between the two parts of said latch, in the opposite direction to the couple exerted between said latch (2) and said hook and constantly tending to press them against said abutment means (2a).

2. Snap shackle according to claim 1, **characterised in that** the pivot axis (4) of the latch (2) and the pivot axis (4) of the two hinged parts of the latch coincide.

3. Snap shackle according to any one of the preceding claims, **characterised in that** one part of the latch is in the shape of a U-section lever (2), between the parallel branches of which a bridge-piece (3) forming the other part is mounted, said abutment means (2a) being formed by the deformation of part of at least one of said parallel branches of said lever, in the trajectory of said bridge-piece (3).

4. Snap shackle according to any one of the preceding claims, **characterised in that** the moment of the couple exerted between the two parts of said latch (2) is substantially greater than that of the couple exerted between said latch (2) and said hook.

5. Snap shackle according to any of the preceding claims, **characterised in that** the hook comprises a first attachment point (1c) provided at one end of the hook, on an axis of gravity passing through this end and substantially through the middle of the shackle loop closed by said latch, and a second attachment point (1b) located substantially symmetrically opposite the end closed off by said latch relative to said axis of gravity.

6. Snap shackle according to one of the preceding claims, **characterised in that** the snap shackle comprises means for temporarily fixing to the end of a boat-hook or an elongate rod.
